# EUROPEAN PATENT SPECIFICATION

(11) **EP 3 412 603 B1**
(45) Date of publication and mention of the grant of the patent: **28.07.2021**
(21) Application number: 17175002.9
(22) Date of filing: 08.06.2017
(51) Int. Cl.: B65G 17/00, B65G 47/71, B65G 47/84, G01N 35/04

(54) **SWITCH FOR A CONVEYING LINE FOR TRANSPORTING A LABORATORY DIAGNOSTIC VESSEL CARRIER**
SCHALTER FÜR EINE FÖRDERSTRECKE ZUM TRANSPORT EINES DIAGNOSTISCHEN LABORGEFÄSSTRÄGERS
COMMUTATEUR POUR UNE LIGNE DE TRANSPORT SERVANT À TRANSPORTER UN SUPPORT DE CUVE DE DIAGNOSTIC EN LABORATOIRE

(43) Date of publication of application: 12.12.2018
(73) Proprietor: Roche Diagnostics GmbH, 68305 Mannheim (DE); F. Hoffmann-La Roche AG, 4070 Basel (CH)
(72) Inventor: Huber, David, 6030 Ebikon (CH); Arnold, Daniel, 5634 Merenschwand (CH)
(74) Representative: Altmann Stößel Dick Patentanwälte PartG mbB

(56) References cited:
- WO-A1-2010/061546
- WO-A1-2010/085670
- DE-A1- 2 644 137
- US-A- 3 613 885
- US-A- 4 798 095
- US-A- 5 941 366
- US-A1- 2010 300 831
- US-A1- 2013 240 324
- US-A1- 2014 072 473
- US-A1- 2015 014 125
- US-A1- 2017 045 545

## Description

### Field of the invention

The present invention relates to a switch for a conveying line for transporting a laboratory diagnostic vessel carrier, to a switch assembly and to a conveying line.

### Related art

Labor saving for examination work in the medical field has recently proceeded by introducing diverse automated devices. For example, for testing in a hospital, the samples of inpatients and outpatients are collected from several sections of the hospital and collectively processed in an examination room. Test items for each sample are sent from doctors to the examination room by use of an online information processing system. Test results are then reported online from the examination room to the doctors. For many of test items on blood or urine, pretreatment for testing needs to be performed such as centrifugal process, unplugging, dispensing, and the like. It takes much time for engagement in such pretreatment work in total testing working hours.

Next, the flow of a process to be performed by a general automated sample testing system is described. A vessel such as test tube that holds a body fluid such as blood collected from a patient is held by a vessel carrier. Such vessel carriers are known and described, e.g. in EP 2907576, WO 2016/012517 or US 5651941. The vessel carrier holding the vessel such as the test tube is loaded into the general automated sample testing system. Barcode information of the loaded sample is read in the system so that the sample type is recognized. As described above, the centrifugal process, unplugging, dispensing, and the like are performed as the pretreatment for the test process.

The contents of the pretreatment vary depending on the sample type, for example, for a urine test, the centrifugal process does not need to be performed. A sample type that needs to be subjected to the centrifugal separation is a sample on which the unplugging and dispensing are performed after centrifugal separation. The dispensing process usually known as aliquoting is a process in which a child sample is generated from a parent sample. For example, dispensed child samples can be simultaneously transported to multiple analyzers that are connected to the system online. A sample that is completed with all processes is stored in a storage module.

The automated sample testing system is introduced in a relatively large facility where hundreds to thousands samples are processed in a day or even per hour. In such large facility, many samples are collected from one patient for multiple testing such as a biochemical test, an immunological test, a solidification test, and a hematological test. Therefore, the number of sample carriers for the hundreds to thousands patients are needed for loading into the automated sample testing system, and accordingly, a space for installing such a sample testing system is required.

For conveying the respective samples to the multiple analyzers, usually a conveying line is installed. Such a conveying line usually comprises several conveying means such as conveying belt which are present in different line portions. Also a transport system for vessel carriers as described in WO 2011/138448 can be used as conveying lines.

For different reasons, it is necessary to direct the vessel carriers to different line portions of the conveying line. For example, in some error cases and after an initialization, the probes in the test tubes need to be moved back to a tube identification station. Running the whole system backwards is not possible with each system.

US 3 613 885 A describes a starwheel turnable abstracting articles from a conveyor and returning properly labeled objects to it. Inadequately labeled objects are diverted and segregated. Labels are sensed in an initial portion of the turntable and accept signals generated thereby are advanced to the diverter when the articles pass through an advance triggering device. A verifying reject signal for the following article is generated when the immediate article is passing between the triggering device and the diverter. The release of this reject signal is delayed until after the next article has time to pass through the advance triggering device and is cancelled if such next advance triggering is accomplished. This prevents any article slipping by the signal advancing trigger without actuating it from being accepted.

The reject signal is accordingly held in a bistable switch long enough to reject the following article if it does not trigger the advance of its own label detecting signal. The advance and verifying signals are conveniently triggered by photoelectric devices. Label detecting is effectively accomplished for transparent and semitransparent articles by a series of photoelectric sensing heads having illuminated scanning chambers past which the articles pass closely adjacent. A label disperses sufficient light back into the chamber to generate an accept signal, whereas, the transparent or semitransparent unlabeled wall transmits the light away without generating a signal.

US 5 941 366 A describes a tansport system for biospecimens which includes a conveyor including a conveyor each divided into two or more lanes by lane dividers means. Specimen carriers, each carrying one biospecimen container, include a base which engages the conveyor to transport the biospecimen container and at least three retainer members which are biased together to accept and retain the biospecimen container on the carrier. A variety of traffic control devices, such as diverters and singulators, as well as other control mechanisms such as orientation rails and orientation rollers are combined into control stations to manage the transport of the biospecimens through the system.

US 2013/0240324 A1 describes a diverter disc for a conveyer system, comprising a circular outer periphery and an grip opening formed in the periphery of the diverter disc, where the grip opening is adapted to hold and divert a puck comprising a circular slide ring at the contact region and that the grip opening is shaped in a non-circular shape such that a plurality of discrete contact points are formed in the grip opening. The advantage of the diverter disc is that it will be able to hold the slide ring of a puck in a more secure way due to the reduced contact surface compared with a conventional diverter disc.

US 2014/0072473 A1 describes a junction for transporting sample racks in an analytical system having one or more work cells for processing samples are disclosed. In one embodiment, the junction may include a main transport line, a turntable having a rotatable transport line, and one or more bypass transport lines. The main transport line can transport first sample racks and second sample racks having different sizes via the turntable. The turntable further comprises a recess for diverting second sample racks from the main transport line to the bypass transport line or vice versa when rotated.

DE 26 44 137 A1 describes work pieces being displaced at the diverting station onto a receiving conveyor. The work pieces are mounted on supports which are at least partly guided by side walls of the respective conveyors. Each support is fitted with a centrally positioned vertical carrier. Above the belt conveyor is a guide disc rotating parallel with the conveyor belt plane. The disc has U-shaped recesses dimensioned to accommodate a carrier. During rotation of the disc, its recess engages the carrier of the work piece support and its cylindrical surface at each side of the recess forms a stop for a following work piece support.

EP 2 889 236 A1 describes a sample transport apparatus comprising a direction changing mechanism. The direction changing mechanism is arranged at an intersection of two transport lines with different transport directions. The direction changing mechanism includes a direction changing arm and a direction changing arm driving motor. A movable end of the direction changing arm has a curved shape. The direction changing arm allows switching of the transport direction of the sample that moves on the main transport line. WO2010/061546 discloses a transport system for semiconductor wafers with transport lines and a switch to change the direction of the wafers.

Despite the advantages provided by the latter sample transport apparatus, there are still some drawbacks. The guiding of the samples is not smoothly and reliable. Particularly, the direction changing arm engages the test tube and not the vessel carrier such that there is a risk that the test tube and the vessel carrier tilt over.

### Summary

Disclosed herein are a switch for a conveying line for transporting a laboratory diagnostic vessel carrier, switch assembly and a conveying line allowing to smoothly and reliably change the transport direction for a vessel carrier.

Embodiments of the disclosed switch for a conveying line for transporting a laboratory diagnostic vessel carrier, switch assembly and conveying line have the features of the independent claims. Particular embodiments, which might be realized in an isolated fashion or in any arbitrary combination, are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The disclosed switch for a conveying line for transporting a laboratory diagnostic vessel carrier, which conveying line comprises a first line portion and a second line portion, comprises a curved first guiding surface and a second guiding surface. The switch is moveable between a first position, in which the laboratory diagnostic vessel carrier is transportable along the curved first guiding surface from the first line portion to the second line portion, and a second position, in which the laboratory diagnostic vessel carrier is further transportable along the second guiding surface on the first line portion.

The term "laboratory diagnostic vessel" as used herein refers to any type of container suitable to store a sample or reagent in the field of analytics and more particularly medical analytics. Such vessels are usually designed as tubes. The term "laboratory diagnostic vessel carrier" as used herein basically refers to any device configured to hold one or more laboratory diagnostic vessels and to be supplied through a conveying line. Thus, the vessel carrier may be configured as a single vessel carrier suitable to receive a single laboratory diagnostic vessel or a rack suitable to receive a plurality of vessels. Without any restriction, particular embodiments are described with reference to so called test tube holders. Such a test tube holder can hold one single test tube containing a sample or reagent and convey the test tube via a conveyor line to different modules of an automated sample testing system. The test tube holder comprises a housing with a spring for fixing a test tube, a test tube holder body housing, and a bottom lid housing. The housing with a spring for fixing a test tube has a columnar structure whose center part is roundly bored so as to allow the insertion of the test tube, and is provided with spring parts inside projecting parts extending upward. It is to be noted that the housing with a spring usually has a columnar shape, but it may have any shape as long as the housing can vertically hold the test tube by the spring parts provided equidistantly or equiangularly, and an outer shape of the housing may be a polygonal column shape. The test tube holder body housing has a cylindrical shape, and desirably has a cavity part therein. In the cavity part, a tag with a unique ID number, a weight for stably conveying the test tube, and others are housed. Also, the test tube holder body housing and the bottom lid housing have an outer diameter larger than that of the test tube to be conveyed and smaller than the width of the conveyor line. Note that the shape of the test tube holder body housing and the bottom lid housing may be, for example, a polygonal shape. Even in that case, a maximum length in a cross-sectional direction is desirably smaller than the width of the conveyor line. Particular test tube holder that may be used with the present invention are described in EP 2 902 790 A1.

Thus, the switch allows to smoothly and reliably guide the vessel carrier as the switch provides two guiding surfaces along which the vessel carrier may be transported in each of the two positions, either the first position or the second position. Thus, the vessel carrier is engaged by the guiding surfaces and reliably guided to its target line portion.

The switch may be configured to enter the first line portion in the first position and may be configured to retract from the first line portion in the second position such that the second guiding surface flushes with a boundary of the first line portion. Thus, switch may be moved into or out of the first line portion. When moved out of the first line portion, the second guiding surface is designed such that the boundary of the first line portion and the second guiding surface smoothly transition into one another. Thus, the vessel carrier is smoothly transported along the boundary as well as along the second guiding surface.

The second guiding surface may be straight. Thus, the switch provides no change of the transporting direction for the vessel carrier if guided along the second guiding surface.

The curved first guiding surface may be curved at an angle of 10° to 180 °, preferably 25° to 120° and more preferably 45° to 90°. Thus, the first guiding surface may be designed with a broad range for the curvature and provide a smooth guidance wit each curvature.

The curved first guiding surface and the second guiding surface are configured to engage the laboratory diagnostic vessel carrier. Thus, each of curved first guiding surface and the second guiding surface engages the laboratory diagnostic vessel carrier rather than the laboratory diagnostic vessel which prevents the laboratory diagnostic vessel and the laboratory diagnostic vessel carrier from tilting over.

The curved first guiding surface and the second guiding surface may each comprise an input end configured to face a transport direction of the first line portion, wherein the input ends of the curved first guiding surface and the second guiding surface are arranged adjacent to one another. Thus, the switch needs to be moved only a rather small distance in order to cause a change of the transporting direction for the laboratory diagnostic vessel carrier.

The switch is linearly moveable between the first position and the second position. Such a movement may be realized with only a few constructional members in a rather simple manner.

The curved first guiding surface may be curved with a radius of 20 mm to 80 mm, preferably 25 mm to 60 mm and more preferably 30 mm to 45 mm. Thus, the radius may be adapted to the respective application or dimensions of the conveying line.

The radius may correspond to a width of the first line portion. Thus, an abrupt change of the transport direction is avoided.

The laboratory diagnostic vessel carrier may be a single laboratory diagnostic vessel carrier. Thus, each laboratory diagnostic vessel carrier may be configured to hold a single laboratory diagnostic vessel.

The curved first guiding surface and/or the second guiding surface comprises a protrusion configured to partially engage the laboratory diagnostic vessel carrier.

The protrusion may be rib-shaped.

The disclosed switch assembly comprises a switch as described before and a drive configured to move the switch between the first position and the second position. Thus, the switch may be moved in an automated manner.

The drive may comprise a stepping motor, a tooth rack, a tooth wheel and a linear gear. Thus, the switch may be moved by means of well established constructional members such the overall configuration may be realized in a cost efficient manner.

The tooth rack may be connected to the switch, wherein the linear gear and the tooth wheel may be connected to the stepping motor, wherein the tooth wheel engages with the tooth rack. Thus, a rather compact configuration is provided.

The drive may be configured to move the switch with a hub of 20 mm to 80 mm, preferably 25 mm to 60 mm and more preferably 30 mm to 45 mm. Thus, with a rather small hub a change of the transporting direction may be realized.

The switch assembly may further comprise at least one light barrier configured to detect whether the switch is in the first position and/or configured to detect whether the switch is in the second position. Thus, the exact position of the switch may be monitored.

The disclosed conveying line for transporting a laboratory diagnostic vessel carrier comprises a first line portion, a second line portion, and switch as described before or a switch assembly as described before.

### Short description of the Figures

Further features and embodiments of the invention will be disclosed in more detail in the subsequent description of embodiments, particularly in conjunction with the dependent claims. Therein, the respective features may be realized in an isolated fashion as well as in any arbitrary feasible combination, as the skilled person will realize. The scope of the invention is not restricted by the embodiments. The embodiments are schematically depicted in the figures. Therein, identical reference numbers in these figures refer to identical or functionally comparable elements.

In the Figures:
- Figure 1: shows a perspective view of a switch assembly;
- Figure 2: shows a perspective view from underneath of the switch assembly;
- Figure 3: shows a perspective view of a conveying line with the switch in the first position;
- Figure 4: shows a top view of the conveying line with the switch in the first position;
- Figure 5: shows a perspective view of the conveying line with the switch in the second position;
- Figure 6: shows a top view of the conveying line with the switch in the second position;
- Figure 7: shows a perspective view of the conveying line during operation with the switch in the first position;
- Figure 8: shows a top view of the conveying line during operation with the switch in the first position;
- Figure 9: shows a perspective view of the conveying line during operation with the switch in the second position;
- Figure 10: shows a top view of the conveying line during operation with the switch in the second position;
- Figure 11: shows a top view of the conveying line during operation with the switch in the first position; and
- Figure 12: shows an enlarged view of a detail of a cross-section taken along line A-A of Figure 11.

### Detailed description

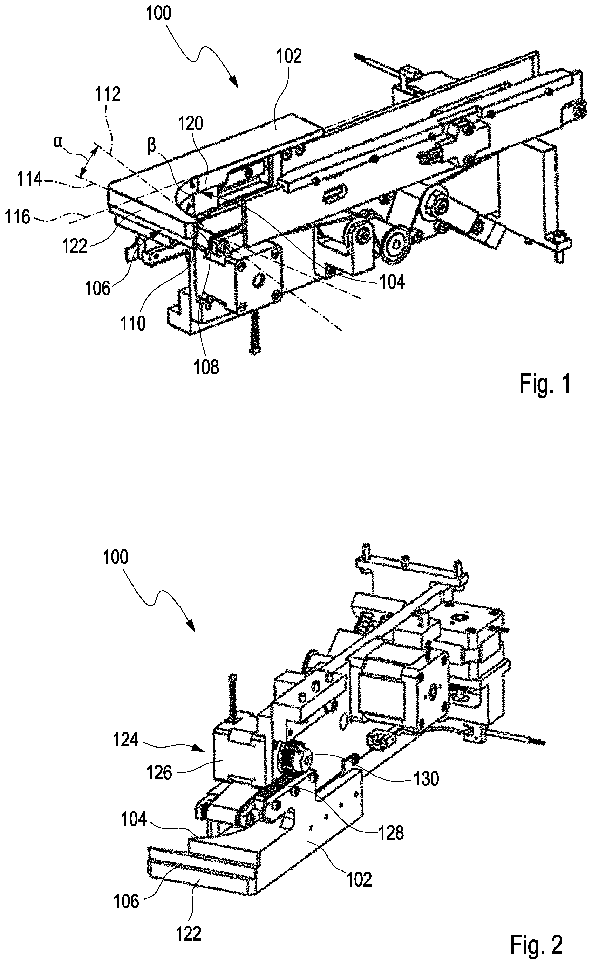

Figure 1 shows a perspective view of a switch assembly 100. The switch assembly 100 comprises a switch 102. The switch 102 comprises a curved first guiding surface 104 and a second guiding surface 106. The second guiding surface 106 is straight. The curved first guiding surface and the second guiding surface 106 each comprise an input end 108, 110. The input ends 108, 110 of the curved first guiding surface 104 and the second guiding surface 106 are arranged adjacent to one another. Particularly, tangents 112, 114 to the input ends 108, 110 form an acute angle α. The angle α may be in a range of 2° to 35°, preferably 2° to 30° and more preferably 2° to 25° such as 20° or even 20°. The curved first guiding surface 104 is curved at an angle β of 10° to 180 °, preferably 25° to 120° and more preferably 45° to 90° such as 85° or even 90°. The angle β is defined between the tangent 112 to the input end 108 of the first guiding surface 104 and a tangent 116 to an output end 118 of the first guiding surface 104. The curved first guiding surface 104 is curved with a radius of 20 mm to 80 mm, preferably 25 mm to 60 mm and more preferably 30 mm to 45 mm such as 40 mm. The first guiding surface 104 and the second guiding surface 106 each comprises a rib-shaped protrusion 120, 122 located at an upper portion thereof. The rib-shaped protrusion 120 of the first guiding surface 104 extends along the curvature thereof. The rib-shaped protrusion 122 of the second guiding surface 106 extends along the straight formation thereof.

Figure 2 shows a perspective view from underneath of the switch assembly 100. The switch 102 is moveable between a first position and a second position. More particularly, the switch 102 is linearly moveable between the first position and the second position. The switch assembly 100 comprises a drive 124 configured to move the switch 102 between the first position and the second position. The drive 124 comprises a stepping motor 126, a tooth rack 128, a tooth wheel 130 and a linear gear (not shown in detail). The tooth rack 128 is connected to the switch 102. The tooth rack 128 is mounted to a lower side of the switch 102. The stepping motor 126 is located below the switch 102. The linear gear and the tooth wheel 130 are connected to the stepping motor 126. The tooth wheel 130 engages with the tooth rack 128. The drive 124 is configured to move the switch 102 with a hub of 20 mm to 80 mm, preferably 25 mm to 60 mm and more preferably 30 mm to 45 mm such 40 mm. Operating the stepping motor 126 causes the linear gear to operate and to rotate the tooth wheel 130. Rotation of the tooth wheel 130 causes the tooth rack 128 and, thus, the switch 102 to linearly move. Optionally, the switch assembly 100 may further comprise at least one light barrier (not shown in detail) configured to detect whether the switch 102 is in the first position and/or configured to detect whether the switch 102 is in the second position.

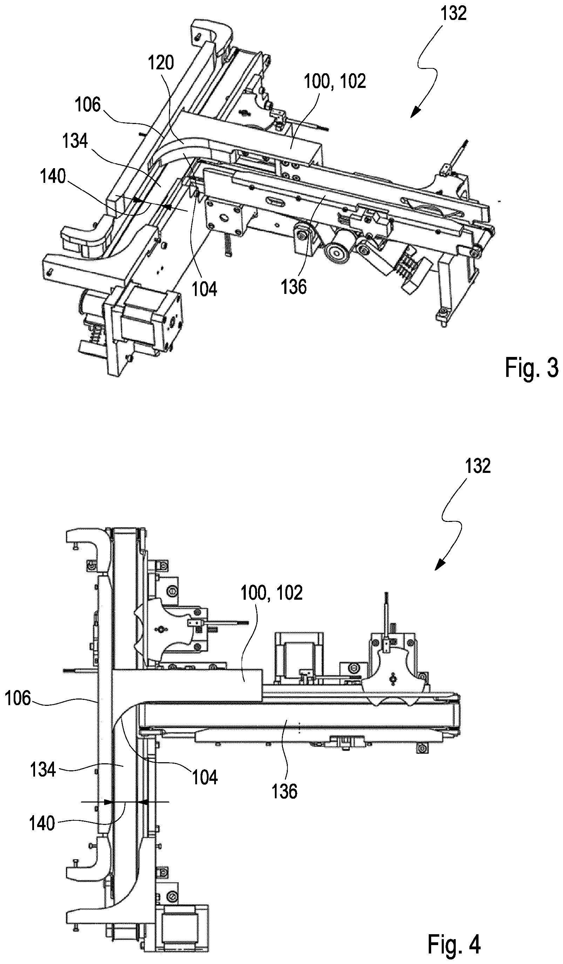

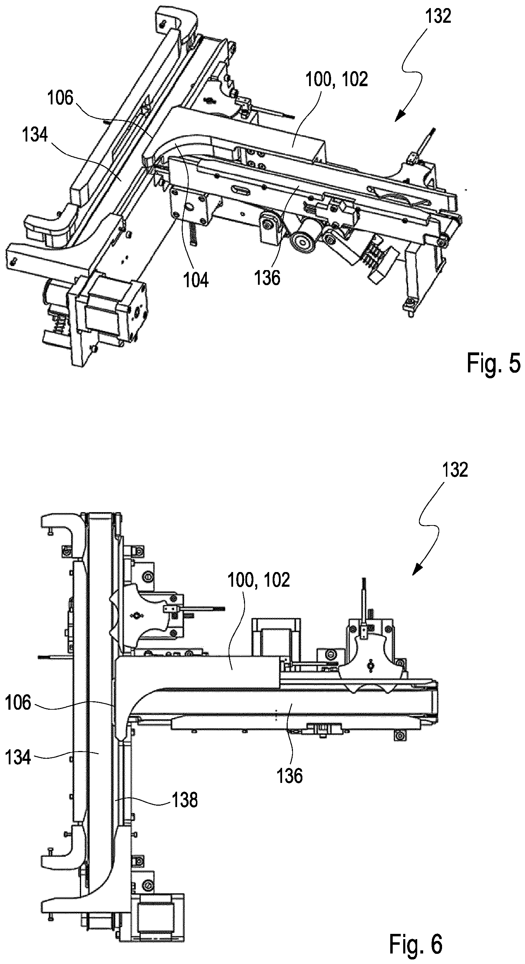

Figure 3 shows a perspective view of a conveying line 132 to which the switch assembly 100 is installed with the switch 102 in the first position. Figure 4 shows a top view of the conveying line 132 with the switch 102 in the first position. Figure 5 shows a perspective view of the conveying line 132 with the switch 102 in the second position. Figure 6 shows a top view of the conveying line 132 with the switch 102 in the second position. The conveying line 132 comprises a first line portion 134 and a second line portion 136. The second line portion 136 is arranged perpendicular with respect to the first line portion 134. The switch 102 is configured to enter the first line portion 134 in the first position as shown in Figures 3 and 4. Further, the switch 102 is configured to retract from the first line portion 134 in the second position such that the second guiding surface 106 flushes with a boundary 138 of the first line portion 134 as shown in Figures 5 and 6. The radius of the curved first guiding surface 104 corresponds to a width 140 of the first line portion 134.

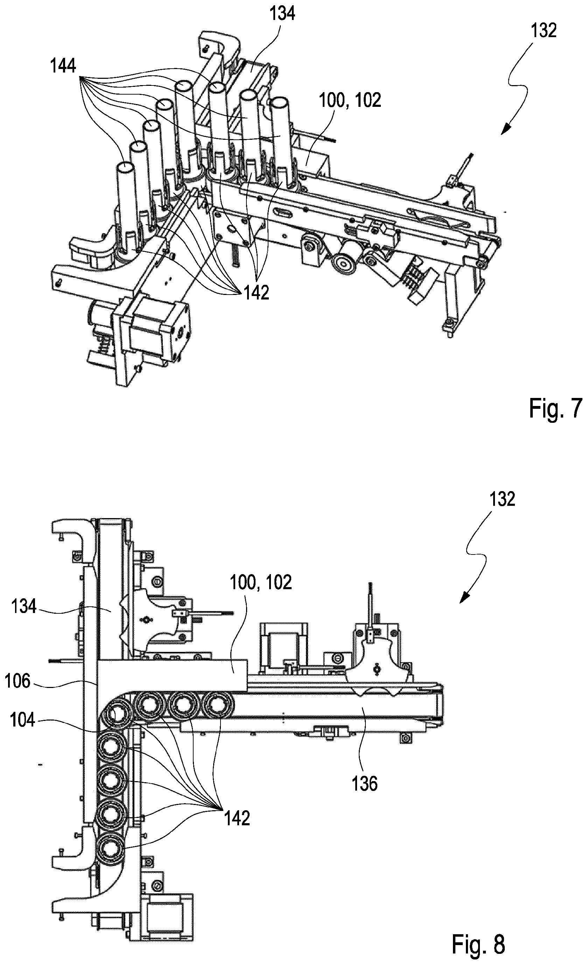

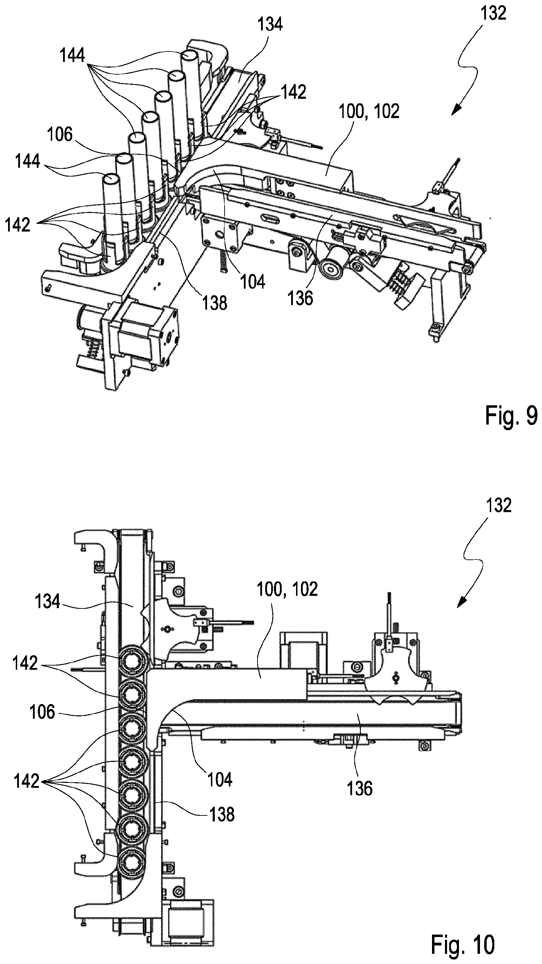

Figure 7 shows a perspective view of the conveying line 132 during operation with the switch 102 in the first position. Figure 8 shows a top view of the conveying line 132 during operation with the switch 102 in the first position. Figure 9 shows a perspective view of the conveying line 132 during operation with the switch 102 in the second position. Figure 10 shows a top view of the conveying line 132 during operation with the switch 102 in the second position. The conveying line 132 is configured to transport a laboratory diagnostic vessel carrier 142. The laboratory diagnostic vessel carrier 142 is a single laboratory diagnostic vessel carrier. It is to be noted that Figures 7 to 10 show a plurality of laboratory diagnostic vessel carriers 142 which may be transported on the conveying line 132. The curved first guiding surface 104 and the second guiding surface 106 are configured to engage the laboratory diagnostic vessel carrier 142 as will be explained in further detail below. In the first position of the switch 102, the laboratory diagnostic vessel carrier 142 is transportable along the curved first guiding surface 104 from the first line portion 134 to the second line portion 136 as shown in Figures 7 and 8. In the second position of the switch 102, the laboratory diagnostic vessel carrier 142 is further transportable along the second guiding surface 106 on the first line portion 134 as shown in Figures 9 and 10.

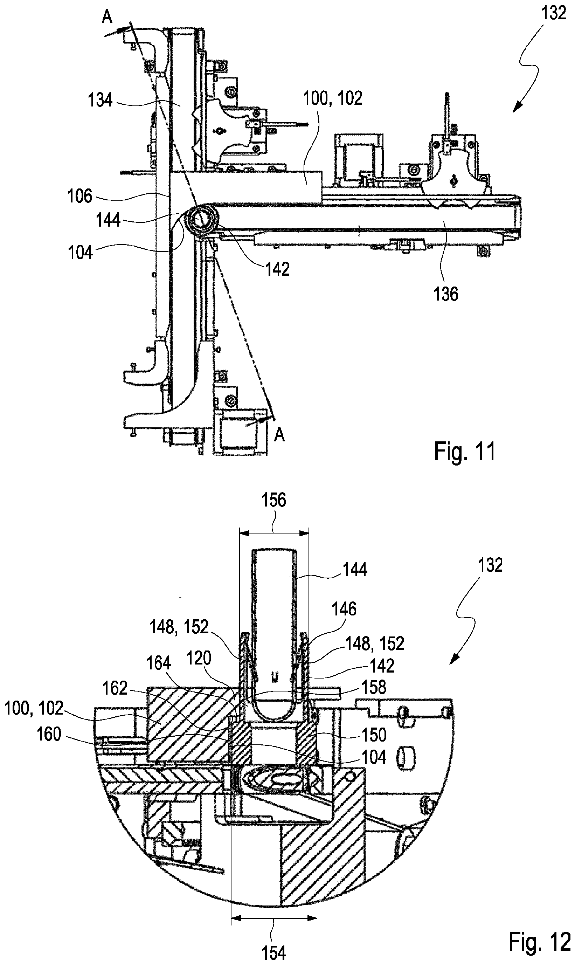

Figure 11 shows a top view of the conveying line 132 during operation with the switch 102 in the first position. For explanatory purposes, only one laboratory diagnostic vessel carrier 142 is shown which is a single test tube holder that holds a laboratory diagnostic vessel 144 such as a test tube. The curved first guiding surface 104 engages the laboratory diagnostic vessel carrier 142 so as to transport the same to the second line portion 136.

Figure 12 shows an enlarged view of a detail of a cross-section taken along line A-A of Figure 11. The laboratory diagnostic vessel carrier 142 comprises a housing 146 with a spring 148 for fixing the test tube, a test tube holder body housing 150, and a bottom lid housing (not shown in detail). The housing 146 with the spring 148 for fixing a test tube has a columnar structure whose center part is roundly bored so as to allow the insertion of the test tube, and is provided with spring parts 152 inside projecting parts extending upward. It is to be noted that the housing 146 with the spring 148 usually has a columnar shape, but it may have any shape as long as the housing 146 can vertically hold the test tube by the spring parts 152 of the spring 148 provided equidistantly or equiangularly. The test tube holder body housing 150 has a cylindrical shape. The housing 146 is arranged on the test tube holder body housing 150 and the bottom lid housing. As shown in Figure 11, the test tube holder body housing 150 has a width 154 larger than a width 156 of the housing with the spring 148. As such, the test tube holder body housing 150 laterally protrudes from the housing 146 if seen in a top view.

As mentioned above, the first guiding surface 104 comprises the rib shaped protrusion 120. The rib shaped protrusion 120 partially engages the laboratory diagnostic vessel carrier 142. With other words, the rib shaped protrusion 120 engages a portion of the laboratory diagnostic vessel carrier 142 as will be explained in further detail below. The rib shaped protrusion 120 is configured such that a front surface 158 of the rib shaped protrusion 120 engages the housing 146 while a portion 160 of the first guiding surface 104 located below the rib shaped protrusion 120 engages the test tube holder body housing 150. Further, a distance between a lower side 162 of the rib shaped protrusion 120 and a top surface 164 of the test tube holder body housing 150 is rather small such that the laboratory diagnostic vessel carrier 142 may not tilt over as the top surface 164 of the test tube holder body housing 150 would immediately engage the lower side 162 of the rib shaped protrusion 120 when starting to tilt. Thus, the laboratory diagnostic vessel carrier 142 may be smoothly and reliably guided along the first guiding surface 104. It is explicitly stated that the rib shaped protrusion 122 of the second guiding surface 106 may be identically designed to the rib shaped protrusion 120 of the first guiding surface 104.

### List of reference numbers

- 100: switch assembly
- 102: switch
- 104: first guiding surface
- 106: second guiding surface
- 108: input end
- 110: input end
- 112: tangent
- 114: tangent
- 116: tangent
- 118: output end
- 120: rib-shaped protrusion
- 122: rib-shaped protrusion
- 124: drive
- 126: stepping motor
- 128: tooth rack
- 130: tooth wheel
- 132: conveying line
- 134: first line portion
- 136: second line portion
- 138: boundary
- 140: width
- 142: laboratory diagnostic vessel carrier
- 144: laboratory diagnostic vessel
- 146: housing
- 148: spring
- 150: test tube holder body housing
- 152: spring parts
- 154: width
- 156: width
- 158: front surface
- 160: portion
- 162: lower side
- 164: top surface
- α: angle
- β: angle

## Claims

1. A switch (102) for a conveying line (132) for transporting a laboratory diagnostic vessel carrier (142), wherein the conveying line (132) comprising a first line portion (134) and a second line portion (136), wherein the switch (102) comprises a curved first guiding surface (104) and a second guiding surface (106), wherein the switch (102) is moveable between a first position, in which the laboratory diagnostic vessel carrier (142) is transportable along the curved first guiding surface (104) from the first line portion (134) to the second line portion (136), and a second position, in which the laboratory diagnostic vessel carrier (142) is further transportable along the second guiding surface (106) on the first line portion (134), **characterized in that**, the switch (102) is linearly moveable between the first position and the second position, wherein the curved first guiding surface (104) and the second guiding surface (106) are configured to engage the laboratory diagnostic vessel carrier (142), wherein the curved first guiding surface (104) and/or the second guiding surface (106) comprises a protrusion configured to partially engage the laboratory diagnostic vessel carrier (142).

2. The switch (102) according to claim 1, wherein the switch (102) is configured to enter the first line portion (134) in the first position, wherein the switch (102) is configured to retract from the first line portion (134) in the second position such that the second guiding surface (106) flushes with a boundary ((134)) of the first line portion (134).

3. The switch (102) according to claim 1 or 2, wherein the second guiding surface (106) is straight.

4. The switch (102) according to any one of claims 1 to 3, wherein the curved first guiding surface (104) is curved at an angle (β) of 10° to 180 °, preferably 25° to 120° and more preferably 45° to 90°.

5. The switch (102) according to any one of claims 1 to 4, wherein the curved first guiding surface (104) and the second guiding surface (106) each comprise an input end (108, 110) configured to face a transport direction of the first line portion (134), wherein the input ends (108, 110) of the curved first guiding surface (104) and the second guiding surface (106) are arranged adjacent to one another.

6. The switch (102) according to any one of claims 1 to 5, wherein the curved first guiding surface (104) is curved with a radius of 20 mm to 80 mm, preferably 25 mm to 60 mm and more preferably 30 mm to 45 mm.

7. The switch (102) according to any one of claims 1 to 6, wherein the laboratory diagnostic vessel carrier (142) is a single laboratory diagnostic vessel carrier.

8. The switch (102) according to any one of claims 1 to 7, wherein the curved first guiding surface (104) and/or the second guiding surface (106) comprises a protrusion (120, 122) configured to partially engage the laboratory diagnostic vessel carrier (142).

9. A switch assembly (100) comprising a switch (102) according to any one of claims 1 to 8 and a drive (124) configured to move the switch (102) between the first position and the second position.

10. The switch assembly (100) according to claim 9, wherein the drive (124) comprises a stepping motor (126), a tooth rack (128), a tooth wheel (130) and a linear gear, in particular wherein the tooth rack (128) is connected to the switch (102), wherein the linear gear and the tooth wheel (130) are connected to the stepping motor (126), wherein the tooth wheel (130) engages with the tooth rack (128).

11. The switch assembly (100) according to claim 9 or 10, wherein the drive (124) is configured to move the switch (102) with a hub of 20 mm to 80 mm, preferably 25 mm to 60 mm and more preferably 30 mm to 45 mm.

12. The switch assembly (100) according to any one of claims 9 to 11, further comprising at least one light barrier configured to detect whether the switch (102) is in the first position and/or configured to detect whether the switch (102) is in the second position.

13. A conveying line (132) for transporting a laboratory diagnostic vessel carrier (142), comprising a first line portion (134), a second line portion (136), and a switch (102) according to any one of claims 1 to 9 or a switch assembly (100) according to any one of claims 9 to 12.

## Patentansprüche

1. Weiche (102) für eine Förderstrecke (132) zum Transportieren eines Labordiagnosegefäßträgers (142), wobei die Förderstrecke (132) einen ersten Streckenabschnitt (134) und einen zweiten Streckenabschnitt (136) umfasst, wobei die Weiche (102) eine gekrümmte erste Führungsfläche (104) und eine zweite Führungsfläche (106) umfasst, wobei die Weiche (102) zwischen einer ersten Stellung, in welcher der Labordiagnosegefäßträger (142) entlang der gekrümmten ersten Führungsfläche (104) von dem ersten Streckenabschnitt (134) zu dem zweiten Streckenabschnitt (136) transportierbar ist, und einer zweiten Stellung bewegbar ist, in welcher der Labordiagnosegefäßträger (142) ferner entlang der zweiten Führungsfläche (106) auf dem ersten Streckenabschnitt (134) transportierbar ist, **dadurch gekennzeichnet, dass** die Weiche (102) zwischen der ersten Stellung und der zweiten Stellung linear bewegbar ist, wobei die gekrümmte erste Führungsfläche (104) und die zweite Führungsfläche (106) so eingerichtet sind, dass sie in den Labordiagnosegefäßträger (142) eingreifen, wobei die gekrümmte erste Führungsfläche (104) und/oder die zweite Führungsfläche (106) einen Vorsprung umfasst, der eingerichtet ist, um in den Labordiagnosegefäßträger (142) teilweise einzugreifen.

2. Weiche (102) nach Anspruch 1, wobei die Weiche (102) so eingerichtet ist, dass sie in der ersten Stellung in den ersten Streckenabschnitt (134) eintritt, wobei die Weiche (102) so eingerichtet ist, dass sie sich aus dem ersten Streckenabschnitt (134) in der zweiten Stellung zurückzieht, derart dass die zweite Führungsfläche (106) mit einer Grenze (134) des ersten Streckenabschnitts (134) bündig abschließt.

3. Weiche (102) nach Anspruch 1 oder 2, wobei die zweite Führungsfläche (106) gerade ist.

4. Weiche (102) nach einem der Ansprüche 1 bis 3, wobei die gekrümmte erste Führungsfläche (104) in einem Winkel (β) von 10° bis 180 °, bevorzugt 25° bis 120° und besonders bevorzugt 45° bis 90° gekrümmt ist.

5. Weiche (102) nach einem der Ansprüche 1 bis 4, wobei die gekrümmte erste Führungsfläche (104) und die zweite Führungsfläche (106) jeweils ein Eingangsende (108, 110) aufweisen, das so eingerichtet ist, dass es einer Transportrichtung des ersten Streckenabschnitts (134) zugewandt ist, wobei die Eingangsenden (108, 110) der gekrümmten ersten Führungsfläche (104) und der zweiten Führungsfläche (106) benachbart zueinander angeordnet sind.

6. Weiche (102) nach einem der Ansprüche 1 bis 5, wobei die gekrümmte erste Führungsfläche (104) mit einem Radius von 20 mm bis 80 mm, bevorzugt 25 mm bis 60 mm und besonders bevorzugt 30 mm bis 45 mm gekrümmt ist.

7. Weiche (102) nach einem der Ansprüche 1 bis 6, wobei der Labordiagnosegefäßträger (142) ein Einzel-Labordiagnosegefäßträger ist.

8. Weiche (102) nach einem der Ansprüche 1 bis 7, wobei die gekrümmte erste Führungsfläche (104) und/oder die zweite Führungsfläche (106) einen Vorsprung (120, 122) aufweist, der so eingerichtet ist, dass er in den Labordiagnosegefäßträger (142) teilweise eingreift.

9. Weichenanordnung (100), umfassend eine Weiche (102) nach einem der Ansprüche 1 bis 8 und einen Antrieb (124), der zum Bewegen der Weiche (102) zwischen der ersten Stellung und der zweiten Stellung eingerichtet ist.

10. Weichenanordnung (100) nach Anspruch 9, wobei der Antrieb (124) einen Schrittmotor (126), eine Zahnstange (128), eine Zahnscheibe (130) und ein Linearzahnrad umfasst, wobei insbesondere die Zahnstange (128) mit der Weiche (102) verbunden ist, wobei das Linearzahnrad und die Zahnscheibe (130) mit dem Schrittmotor (126) verbunden sind, wobei die Zahnscheibe (130) in die Zahnstange (128) eingreift.

11. Weichenanordnung (100) nach Anspruch 9 oder 10, wobei der Antrieb (124) so eingerichtet ist, dass er die Weiche (102) mit einem Hub von 20 mm bis 80 mm, bevorzugt 25 mm bis 60 mm und besonders bevorzugt 30 mm bis 45 mm bewegt.

12. Weichenanordnung (100) nach einem der Ansprüche 9 bis 11, ferner umfassend mindestens eine Lichtschranke, die so eingerichtet ist, dass sie erkennt, ob die Weiche (102) in der ersten Stellung ist, und/oder so eingerichtet ist, dass sie erkennt, ob die Weiche (102) in der zweiten Stellung ist.

13. Förderstrecke (132) zum Transportieren eines Labordiagnosegefäßträgers (142), umfassend einen ersten Streckenabschnitt (134), einen zweiten Streckenabschnitt (136) und eine Weiche (102) nach einem der Ansprüche 1 bis 9 oder eine Weichenanordnung (100) nach einem der Ansprüche 9 bis 12.

## Revendications

1. Aiguillage (102) pour une ligne de transport (132) destinée à transporter un support de récipient de diagnostic de laboratoire (142), la ligne de transport (132) comprenant une première partie de ligne (134) et une deuxième partie de ligne (136), l'aiguillage (102) comprenant une première surface de guidage incurvée (104) et une deuxième surface de guidage (106), l'aiguillage (102) étant mobile entre une première position dans laquelle le support de récipient de diagnostic de laboratoire (142) est transportable le long de la première surface de guidage incurvée (104) depuis la première partie de ligne (134) jusqu'à la deuxième partie de ligne (136), et une deuxième position dans laquelle le support de récipient de diagnostic de laboratoire (142) est transportable le long de la deuxième surface de guidage (106) sur la première partie de ligne (134), **caractérisé en ce que** l'aiguillage (102) est mobile linéairement entre la première position et la deuxième position, la première surface de guidage incurvée (104) et la deuxième surface de guidage (106) étant configurées pour entrer en prise avec le support de récipient de diagnostic de laboratoire (142), la première surface de guidage incurvée (104) et/ou la deuxième surface de guidage (106) comprenant une saillie configurée pour entrer partiellement en prise avec le support de récipient de diagnostic de laboratoire (142).

2. Aiguillage (102) selon la revendication 1, l'aiguillage (102) étant configuré pour pénétrer dans la première partie de ligne (134) dans la première position, l'aiguillage (102) étant configuré pour se rétracter de la première partie de ligne (134) dans la deuxième position de telle sorte que la deuxième surface de guidage (106) est au même niveau qu'une limite (134) de la première partie de ligne (134).

3. Aiguillage (102) selon la revendication 1 ou 2, dans lequel la deuxième surface de guidage (106) est rectiligne.

4. Aiguillage (102) selon l'une quelconque des revendications 1 à 3, dans lequel la première surface de guidage incurvée (104) est incurvée à un angle (β) de 10° à 180°, de préférence 25° à 120° et mieux encore 45° à 90°.

5. Aiguillage (102) selon l'une quelconque des revendications 1 à 4, dans lequel la première surface de guidage incurvée (104) et la deuxième surface de guidage (106) comprennent chacune une extrémité d'entrée (108, 110) configurée pour faire face à une direction de transport de la première partie de ligne (134), les extrémités d'entrée (108, 110) de la première surface de guidage incurvée (104) et la deuxième surface de guidage (106) étant disposées au voisinage l'une de l'autre.

6. Aiguillage (102) selon l'une quelconque des revendications 1 à 5, dans lequel la première surface de guidage incurvée (104) est incurvée avec un rayon de 20 mm à 80 mm, de préférence 25 mm à 60 mm et mieux encore 30 mm à 45 mm.

7. Aiguillage (102) selon l'une quelconque des revendications 1 à 6, le support de récipient de diagnostic de laboratoire (142) étant un support de récipient de diagnostic de laboratoire individuel.

8. Aiguillage (102) selon l'une quelconque des revendications 1 à 7, dans lequel la première surface de guidage incurvée (104) et/ou la deuxième surface de guidage (106) comprend une saillie (120, 122) configurée pour entrer partiellement en prise avec le support de récipient de diagnostic de laboratoire (142).

9. Ensemble aiguillage (100) comprenant un aiguillage (102) selon l'une quelconque des revendications 1 à 8 et un mécanisme d'entraînement (124) configuré pour déplacer l'aiguillage (102) entre la première position et la deuxième position.

10. Ensemble aiguillage (100) selon la revendication 9, dans lequel le mécanisme d'entraînement (124) comprend un moteur pas-à-pas (126), une crémaillère (128), une roue dentée (130) et un engrenage linéaire, en particulier dans lequel la crémaillère (128) est reliée à l'aiguillage (102), dans lequel l'engrenage linéaire et la roue dentée (130) sont reliés au moteur pas-à-pas (126), dans lequel la roue dentée (130) engrène avec la crémaillère (128).

11. Ensemble aiguillage (100) selon la revendication 9 ou 10, dans lequel le mécanisme d'entraînement (124) est configuré pour déplacer l'aiguillage (102) avec un moyeu de 20 mm à 80 mm, de préférence 25 mm à 60 mm et mieux encore 30 mm à 45 mm.

12. Ensemble aiguillage (100) selon l'une quelconque des revendications 9 à 11, comprenant en outre au moins une barrière lumineuse configurée pour détecter si l'aiguillage (102) est dans la première position et/ou configurée pour détecter si l'aiguillage (102) est dans la deuxième position.

13. Ligne de transport (132) destinée à transporter un support de récipient de diagnostic de laboratoire (142), comprenant une première partie de ligne (134), une deuxième partie de ligne (136), et un aiguillage (102) selon l'une quelconque des revendications 1 à 9 ou un ensemble aiguillage (100) selon l'une quelconque des revendications 9 à 12.
